# EUROPEAN PATENT APPLICATION

(11) **EP 4 485 808 A1**
(43) Date of publication of application: **01.01.2025**
(21) Application number: 22927779.3
(22) Date of filing: 25.02.2022
(51) Int. Cl.: H04B 1/401

(54) **COMMUNICATION METHOD, TERMINAL DEVICE, NETWORK DEVICE, CHIP, AND STORAGE MEDIUM**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN); ZUO, Zhisong, Dongguan, Guangdong 523860 (CN); ZHANG, Zhi, Dongguan, Guangdong 523860 (CN); CUI, Shengjiang, Dongguan, Guangdong 523860 (CN); HE, Chuanfeng, Chang'an Guangdong 523860 (CN)
(74) Representative: RGTH
(86) International application number: PCT/CN2022/078032
(87) International publication number: WO 2023/159495

(57) **Abstract**

The present application relates to a communication method, a terminal device, a network device, a chip, a computer-readable storage medium, a computer program product, a computer program and a communication system. The terminal device includes a first transmitter with an active transmission capability and a second transmitter based on back scattering technology. The communication method includes: determining, by a terminal device, a transmission mode, the transmission mode including an active transmission mode and a back scattering transmission mode. By using the embodiments of the present application, the terminal device may achieve extremely low-power transmission as much as possible while transmission performance is ensured.

## Description

### TECHNICAL FIELD

The present application relates to the field of communications, and in particular, to a communication method, a terminal device, a network device, a chip, a computer-readable storage medium, a computer program product, a computer program, and a communication system.

### BACKGROUND

Zero-power communication may be widely used in various industries due to its significant advantages such as extremely low cost, zero-power consumption, and small size. For example, it may be used in vertical industries, such as logistics, smart warehousing, smart agriculture, energy and power, and industrial Internet, and it may also be used in personal applications, such as smart wearables and smart homes.

However, a zero-power terminal has some disadvantages. For example, a passive zero-power terminal can obtain power and be in an activated working state only by relying on a network device to transmit a wireless power supply signal. However, in some scenarios, there is a need for quick data reporting, the passive zero-power terminal may not be able to trigger communication in time, affecting service delay. It is necessary to consider how to achieve extremely low-power transmission while transmission performance is ensured.

### SUMMARY

In view of this, embodiments of the present application provide a communication method, a terminal device, a network device, a chip, a computer-readable storage medium, a computer program product, a computer program, and a communication system.

Embodiments of the present application provide a terminal device, and the terminal device includes a first transmitter with an active transmission capability and a second transmitter based on a back scattering technology.

Embodiments of the present application provide a communication method, and the method includes:
determining, by a terminal device, a transmission mode, the transmission mode including an active transmission mode and a back scattering transmission mode.

Embodiments of the present application further provide another communication method, and the method includes:
transmitting, by a network device, indication information, the indication information being used to determine a transmission mode of a terminal device.

Embodiments of the present application further provide a terminal device, and the terminal device includes:
a mode determining module, configured to determine a transmission mode, the transmission mode including an active transmission mode and a back scattering transmission mode.

Embodiments of the present application further provide a network device, and the network device includes:
a fifth transceiving module, configured to transmit indication information, the indication information being used to determine a transmission mode of a terminal device.

Embodiments of the present application further provide a terminal device, and the terminal device includes: a processor and a memory; the memory is configured to store a computer program, and the processor is configured to call and run the computer program stored in the memory to perform the communication method provided in any embodiment of the present application.

Embodiments of the present application further provide a network device, and the network device includes: a processor and a memory; the memory is configured to store a computer program, and the processor is configured to call and run the computer program stored in the memory to perform the communication method provided in any embodiment of the present application.

Embodiments of the present application further provide a chip, and the chip includes: a processor configured to call and run a computer program from a memory to cause a device equipped with the chip to perform the communication method provided by any embodiment of the present application.

Embodiments of the present application further provide a computer-readable storage medium configured to store a computer program; the computer program causes a computer to perform the communication method provided by any embodiment of the present application.

Embodiments of the present application further provide a computer program product including computer program instructions; the computer program instructions cause a computer to perform the communication method provided by any embodiment of the present application.

Embodiments of the present application further provide a computer program causing a computer to perform the communication method provided by any embodiment of the present application.

Embodiments of the present application further provide a communication system including a terminal device and a network device configured to perform the communication method provided by any embodiment of the present application.

According to technical solutions provided by the embodiments of the present application, the terminal device may timely trigger transmission of information based on an active transmission, or may perform transmission of information based on a back scattering technology, thereby achieving extremely low-power transmission as much as possible while ensuring transmission performance.

### BRIEF DESCRIPTION OF THE DRAWINGS

FIG. 1 is a schematic diagram of an exemplary architecture of a communication system.
FIG. 2 is a schematic diagram of a zero-power communication system of an embodiment of the present application.
FIG. 3 is a schematic diagram of radio frequency energy harvesting of an embodiment of the present application.
FIG. 4 is a schematic diagram of back scattering communication of an embodiment of the present application.
FIG. 5 is a schematic diagram of resistance load modulation of an embodiment of the present application.
FIG. 6A is a schematic diagram of non-return-to-zero encoding of an embodiment of the present application.
FIG. 6B is a schematic diagram of Manchester encoding of an embodiment of the present application.
FIG. 6C is a schematic diagram of unipolar return-to-zero encoding of an embodiment of the present application.
FIG. 6D is a schematic diagram of differential bi-phase encoding of an embodiment of the present application.
FIG. 6E is a schematic diagram of Miller encoding of an embodiment of the present application.
FIG. 7 is a schematic structural block diagram of a terminal device provided by an embodiment of the present application.
FIG. 8 is a schematic structural block diagram of a terminal device provided by another embodiment of the present application.
FIG. 9 is a schematic flowchart of a communication method provided by an embodiment of the present application.
FIG. 10 is a schematic flowchart of a communication method provided by another embodiment of the present application.
FIG. 11 is a schematic structural block diagram of a terminal device provided by an embodiment of the present application.
FIG. 12 is a schematic structural block diagram of a terminal device provided by another embodiment of the present application.
FIG. 13 is a schematic structural block diagram a terminal device provided by provided by yet another embodiment of the present application.
FIG. 14 is a schematic structural block diagram of a terminal device provided by still another embodiment of the present application.
FIG. 15 is a schematic structural block diagram of a network device provided by an embodiment of the present application.
FIG. 16 is a schematic structural block diagram of a network device provided by another embodiment of the present application.
FIG. 17 is a schematic block diagram of a communication device of embodiments of the present application.
FIG. 18 is a schematic block diagram of a chip of embodiments of the present application.
FIG. 19 is a schematic block diagram of a communication system of embodiments of the present application.

### DETAILED DESCRIPTION

Technical solutions in the embodiments of the present application will be described below with reference to the accompanying drawings in the embodiments of the present application.

The technical solutions in the embodiments of the present application may be applied to various communication systems, such as a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial networks (NTN) system, a universal mobile telecommunication system (UMTS), wireless local area networks (WLAN), wireless fidelity (Wi-Fi), a 5th-generation (5G) system, or other communication systems.

Generally speaking, traditional communication systems support a limited number of connections which are easy to be implemented. However, with development of communication technologies, mobile communication systems will support not only traditional communications, but also, for example, device to device (D2D) communication, machine to machine (M2M) communication, machine type communication (MTC), vehicle to vehicle (V2V) communication, vehicle to everything (V2X) communication. The embodiments of the present application may also be applied to these communication systems.

Optionally, a communication system in the embodiments of the present application may be applied to a carrier aggregation (CA) scenario, a dual connectivity (DC) scenario, or a standalone (SA) networking scenario.

In the embodiments of the present application, each embodiment will be described in conjunction with a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user device, or the like.

The terminal device may be a station (ST) in WLAN, which may be a cellular phone, a cordless phone, a session initiation protocol (SIP) phone, a wireless local loop (WLL) station, a personal digital assistant (PDA) device, a handheld device with wireless communication functions, a computing device or other processing devices connected to a wireless modem, an in-vehicle device, a wearable device, a terminal device in a next-generation communication system (e.g., an NR network), a terminal device in a future evolved public land mobile network (PLMN) network, or the like.

In the embodiments of the present application, the terminal device may be deployed on land, including indoor or outdoor, handheld, wearable, or in-vehicle; the terminal device may also be deployed on water (e.g., on a steamship); and the terminal device may also be deployed in air (e.g., on an airplane, on a balloon, or on a satellite).

In the embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

By way of example and not limitation, in the embodiments of the present application, the terminal device may also be a wearable device. The wearable device may also be referred to as a wearable smart device, which is a general term for wearable devices developed by using wearable technology and intelligent design for everyday wear, such as glasses, gloves, a watch, clothing, or shoes. The wearable device is a portable device that is worn directly on a body, or integrated into a user's clothing or accessories. The wearable device is not only a hardware device, but also achieves powerful functions through software support as well as data interaction or cloud interaction. Generalized wearable smart devices include full-featured, large-sized devices that may implement full or partial functionality without relying on smart phones, such as a smart watch or smart glasses, and devices that focus on a certain type of application functionality only and need to be used in conjunction with other devices (such as smart phones), such as various smart bracelets or smart jewelries for monitoring physical signs.

In the embodiments of the present application, the network device may be a device, such as an access network device, for communicating with a mobile device The network device may be an access point (AP) in WLAN, a base station (Base Transceiver Station, BTS) in GSM or CDMA, a base station (NodeB, NB) in WCDMA, an evolved base station (Evolutional Node B, eNB or eNodeB) in LTE, a relay station or access point, an in-vehicle device, a wearable device, a network device (gNB) in an NR network, or a network device in a future evolved PLMN network, or the like.

The network device may also be a core network device, such as a mobility management entity (MME), an access and mobility management function (AMF) entity, or other network entities, which is not limited in the embodiments of the present application.

By way of example and not limitation, in the embodiments of the present application, the network device may have a mobile characteristic. For example, the network device may be a mobile equipment. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station set up on land, water, or the like.

In the embodiments of the present application, the network device may provide services for a cell, and the terminal device may communicate with the network device through transmission resources (e.g., frequency domain resources, or spectrum resources) used by the cell. The cell may be a cell corresponding to the network device (e.g., a base station). The cell may belong to a macro base station or a base station corresponding to a small cell. The small cell here may include a metro cell, a micro cell, a pico cell, a femto cell, or the like. These small cells have characteristics of small coverage and low transmission power, and are suitable for providing high-speed data transmission services.

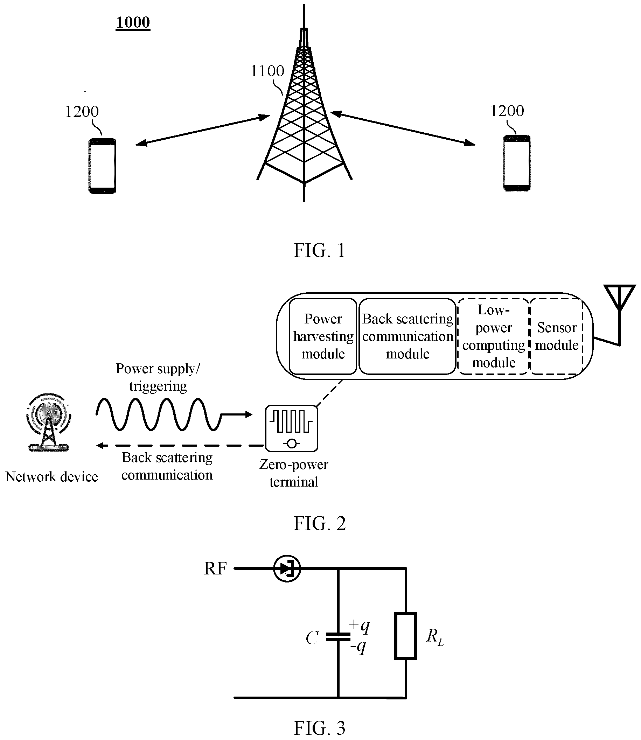

FIG. 1 schematically shows a wireless access system 1000 including a network device 1100 and two terminal devices 1200. Optionally, the wireless communication system 1000 may include multiple network devices 1100, and coverage area of each network device 110 may be provided therein with other number of terminal devices.

It should be understood that a device in a network/system having a communication function in the embodiments of the present application may be referred to as a communication device. In an example of the communication system shown in FIG. 1, the communication devices may include the network device and the terminal devices that have the communication function. The network device and the terminal devices may be specific devices in the embodiments of the present application.

It should be understood that terms "system" and "network" are often used interchangeably herein. The term "and/or" herein is used to describe an association relationship between associated objects, for example, to indicate that there may be three relationships between the related objects. For example, "A and/or B" may represent: A alone, both A and B, and B alone. In addition, the character "/" herein generally indicates that related objects before and after this character are in an "or" relationship.

It should be understood that the "indicate" mentioned in the embodiments of the present application may mean a direct indication or an indirect indication, or represent that there is an association relationship. For example, A indicating B may mean that A directly indicates B, e.g., that B may be obtained through A; or it may mean that A indirectly indicates B, e.g., that A indicates C, and B may be obtained through C; or it may mean that there is an association relationship between A and B.

The term "correspond" described in the embodiments of the present application may mean a relationship of direct or indirect correspondence between the two, or a relationship of association between the two, or a relationship of indicating and being indicated, or configuring and being configured, or the like.

To facilitate understanding of the technical solutions in the embodiments of the present application, related arts of the embodiments of the present application are described below. The following related arts, as optional solutions, may be arbitrarily combined with the technical solutions in the embodiments of the present application, and those combined solutions all belong to protection scope of the embodiments of the present application.

### I. Principle of zero-power communication technology

Zero-power communication uses power harvesting technology and back scattering communication technology. As shown in FIG. 2, a zero-power communication network includes a network device and a zero-power terminal. The network device is used to send a wireless power supply signal and a downlink communication signal to the zero-power terminal, and receive a back scattering signal from the zero-power terminal. A basic zero-power terminal includes a power harvesting module such as a radio frequency (RF) power harvesting module, a back scattering communication module, and a low-power computing module. Optionally, the zero-power terminal may further have a memory or a sensor for storing some basic information (such as object identifications) or obtaining sensor data such as environmental temperature and environmental humidity.

Key technologies of zero-power communication mainly include radio frequency power harvesting and back scattering communication.

### 1. Radio frequency power harvesting (RF Power Harvesting)

As shown in FIG. 3, the radio frequency power harvesting module implements harvesting of electromagnetic wave power in space based on electromagnetic induction principle, and then obtains power required to drive a zero-power terminal to work. For example, this power may be used to drive a low-power demodulation and modulation module, a sensor, and memory reading, etc. Therefore, the zero-power terminal does not need a traditional battery.

### 2. Back scattering communication (Back Scattering)

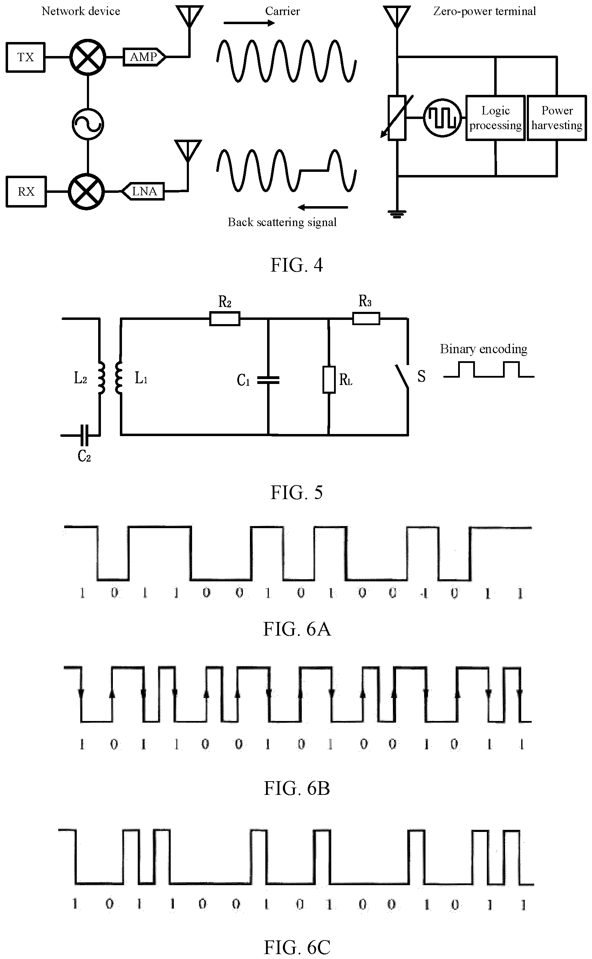

As shown in FIG. 4, a zero-power terminal receives a wireless signal (carrier) sent by a network device, modulates the wireless signal to load information to be sent on the wireless signal, and then radiates a modulated signal (a back scattering signal) from an antenna. This information transmission process is referred to as back scattering communication. Back scattering is inseparable from a load modulation function. Load modulation is a process of adjusting and controlling circuit parameters of an oscillation loop of the zero-power terminal according to the beat of data stream, so that parameters such as impedance of the zero-power terminal (e.g., an electronic tag) are changed accordingly to complete a modulation process.

Load modulation technology mainly includes two manners: resistive load modulation and capacitive load modulation. For the resistive load modulation, as shown in FIG. 5, a resistor R3 is connected in parallel to a load RL, a switch S is turned on or off based on control of binary data streams, so that the resistor R3 is turned on or off. The on and off of the resistor R3 will cause a change in circuit voltage, so that amplitude shift keying (ASK) modulation is realized, that is, modulation and transmission of signal is achieved by adjusting amplitude of back scattering signal of the zero-power terminal. Similarly, for the capacitive load modulation, resonant frequency of a circuit may be changed by the on and off of the capacitor, so that frequency shift keying (FSK) modulation is achieved, that is, modulation and transmission of signal is achieved by adjusting operating frequency of the back scattering signal of the zero-power terminal.

It can be seen that the zero-power terminal modulates an incoming wave signal by means of a manner of load modulation, thereby implementing a back scattering communication process. Therefore, the zero-power terminal has significant advantages that:
(1) the terminal does not actively transmit signals, so it does not need complex radio frequency links, such as a power amplifier (PA), or a radio frequency filter;
(2) the terminal does not need to actively generate high-frequency signals, so it does not need a high-frequency crystal oscillator;
(3) signal transmission of the terminal does not need to consume the terminal's own power by means of back scattering communication.

### II. Application scenarios of zero-power communication

Zero-power communication may be widely used in various industries due to the significant advantages such as extremely low cost, zero-power consumption, and small size. For example, it may be used in vertical industries, such as logistics, smart warehousing, smart agriculture, energy and power, and industrial Internet, and it may also be used in personal applications, such as smart wearables and smart homes.

### III. Encoding mode of zero-power communication

Data transmitted by a zero-power terminal (e.g., an electronic tag) may be represented as binary "1" and "0" by using different forms of codes. Considering a radio frequency identification devices (RFID) system as an example, one of the following encoding modes may usually be used: non-return-to-zero (non return zero, NRZ) encoding, Manchester encoding, unipolar return-to-zero (Unipolar RZ) encoding, differential bi-phase (DBP) encoding, Miller encoding, and differential encoding. In simple terms, different pulse signals are used to represent 0 and 1.

### 1. Non-return-to-zero (NRZ) encoding

In non-return-to-zero encoding, a high level is used to represent a binary value "1", and a low level is used to represent a binary value "0", as shown in FIG. 6A.

### 2. Manchester encoding

Manchester encoding is referred to as Split-Phase Coding. For Manchester encoding, a value of a bit is represented by a change (rising/falling) in level at a half of a bit period within a bit length. A negative jump (falling) at a half of the bit period represents a binary value "1 ", and a positive jump (rising) at a half of the bit period represents a binary value "0", as shown in FIG. 6B. Manchester coding, when applied to load modulation or back scattering modulation of carriers, is usually used in a data transmission scenario from an electronic tag to a reader-writer, because it helps to detect data transmission errors. This is because within the bit length, a "no change" state is not allowed. When data bits sent by multiple electronic tags simultaneously have different values, received rising edges and falling edges cancel each other out, resulting in uninterrupted carrier signals throughout the bit length. Since this state is not allowed, the reader-writer may determine a specific location where a collision occurred by using this error.

### 3. Unipolar RZ encoding

In unipolar return-to-zero encoding, a high level during a first half bit period represents a binary value "1", while a low level signal during an entire bit period represents a binary value "0", as shown in FIG. 6C. Unipolar return-to-zero encoding may be used to extract a bit synchronization signal.

### 4. Differential bi-phase (DBP) encoding

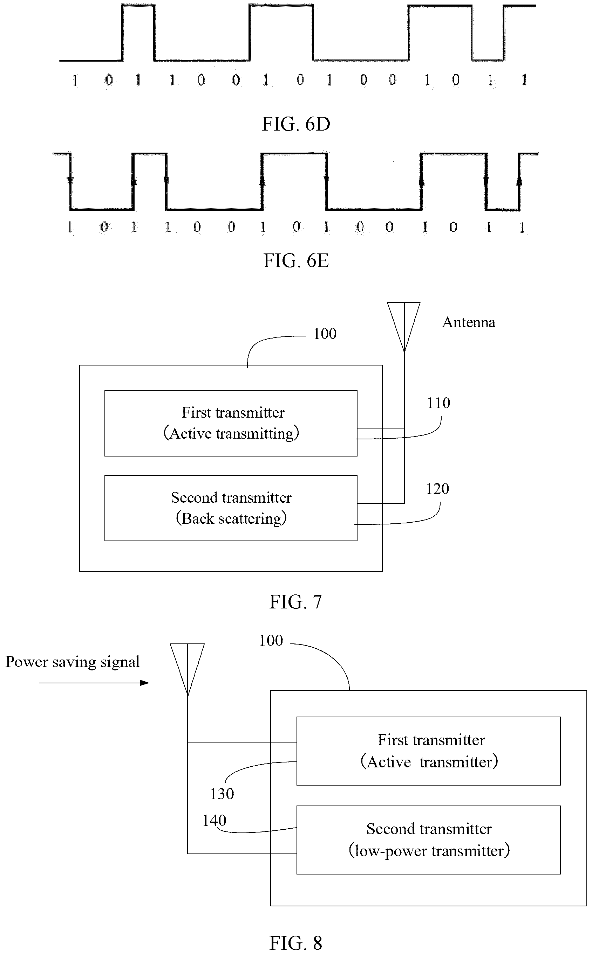

In differential bi-phase encoding, any edge in a half bit period represents a binary value "0", while no edge represents a binary value "1", as shown in FIG. 6D. In addition, a voltage level will be inverted at a beginning of each bit period. Therefore, a bit beat is relatively easy for a receiver to reconstruct.

### 5. Miller encoding

In Miller encoding, any edge in a half bit period represents a binary value "1", and a same level during a next bit period represents a binary value "0". At a beginning of a bit period, a level change occurs, as shown in FIG. 6E. Therefore, a bit beat is relatively easy for a receiver to reconstruct.

### 6. Differential encoding

In differential encoding, each binary value " 1" to be transmitted will cause a change in a signal level, while for a binary value "0", the signal level remains unchanged.

### IV. Classification of Zero-power Terminals

Based on power sources and usages of zero-power terminals, the zero-power terminals may be categorized into following types.

### 1. Passive zero-power terminal

A passive zero-power terminal does not need a built-in battery. When the zero-power terminal approaches a network device (e.g., a reader-writer of an RFID system), the zero-power terminal is within a near field formed by antenna radiation of the network device. Therefore, an antenna of the zero-power terminal generates an induced current through electromagnetic induction, and the induced current drives a low-power chip circuit of the zero-power terminal, which realizes demodulation for a forward link signal and modulation for a backward link signal. For a back scattering link, the zero-power terminal transmits signals by means of back scattering.

It can be seen that the passive zero-power terminal does not need the built-in battery to drive either the forward link or the backward link, and is a true zero-power terminal.

Since the passive zero-power terminal does not need the battery, and a radio frequency circuit and a baseband circuit are very simple, for example, they do not need a low-noise amplifier (LNA), a PA, a crystal oscillator, an analog to digital converter (ADC) and other devices, the passive zero-power terminal has many advantages such as small size, light weight, low price, and long service life.

### 2. Semi-passive zero-power terminal

A semi-passive zero-power terminal itself also does not install a conventional battery therein, but may use a radio frequency power harvesting module to harvest radio wave power and store harvested power in a power storage unit (e.g., a capacitor). After obtaining power, the power storage unit may drive a low-power chip circuit of the zero-power terminal, which realizes demodulation for a forward link signal and modulation for a backward link signal. For a back scattering link, the zero-power terminal transmits signals by means of back scattering.

It can be seen that the semi-passive zero-power terminal does not need a built-in battery to drive either the forward link or the backward link. Although power stored in the capacitor is used in operation, the power comes from the radio power harvested by the power harvesting module. Therefore, it is also a true zero-power terminal.

The semi-passive zero-power terminal inherit many advantages of the passive zero-power terminal, so the semi-passive zero-power terminal has many advantages such as small size, light weight, low price, and long service life.

### 3. Active zero-power terminal

The zero-power terminal used in some scenarios may be an active zero-power terminal, which may have a built-in battery. The battery is used to drive a low-power chip circuit of the zero-power terminal to realize demodulation for a forward link signal and modulation for a backward link signal. However, for a back scattering link, the zero-power terminal transmits signals by means of back scattering. Therefore, the zero-power of this type of terminal is mainly reflected in the fact that signal transmission of a reverse link does not need the terminal's own power, but uses the manner of back scattering.

The active zero-power terminal has a built-in battery to power an RFID chip, which may increase a read-write distance of a tag and improve reliability of communication. Therefore, the active zero-power terminal is used in some scenarios with relatively high requirements on communication distance, reading delay, or the like.

### V. Cellular passive Internet of Things

As 5G industry applications increase, types of connected objects and application scenarios will increase, and there will be high requirements on price and power of communication terminals. Application of Internet of Things devices with battery-free and low-cost passive will become a key technology for cellular Internet of Things, which will enrich types and number of 5G network-connected terminals, thereby truly realizing Internet of everything. The passive Internet of Things devices may be based on zero-power communication technology, such as RFID technology, and extended to be suitable for cellular Internet of Things.

According to above description, a passive zero-power terminal using power harvesting and back scattering may achieve terminal battery-free communication, and achieve extremely low terminal cost and extremely small terminal size. However, the passive zero-power terminal also has some disadvantages. For example, only by relying on a wireless power supply signal send by a network device can the terminal obtain power and thus in an activated working state. Moreover, in general, the terminal does not actively perform back scattering transmission of signals, but only transmits signals (by means of back scattering) when triggered by a signaling of the network device. Therefore, this type of terminal is suitable for scenarios where services do not have special requirements on latency.

In some scenarios, such as environmental sensing, industrial monitoring, or smart wearables, due to service requirements, rapid data reporting is desired when environmental anomalies or changes in user's physical characteristics are detected. However, the network device generally cannot know when the terminal has a corresponding reporting communication requirement. Therefore, passive terminals may not be able to trigger communication of the terminal in time, thus affecting service latency.

Solutions provided in the embodiments of the present application are mainly used to solve at least one of above problems.

In order to understand characteristics and technical contents of the embodiments of the present invention in more detailed, implementation of the embodiments of the present invention is described in detail below in conjunction with the accompanying drawings. The accompanying drawings are for reference only and are not intended to limit the embodiments of the present invention.

FIG. 7 is a schematic structural block diagram of a terminal device 100, in accordance with an embodiment of the present application. As shown in FIG. 7, the terminal device 100 includes a first transmitter 110 with an active transmission capability and a second transmitter 120 based on a back scattering technology. Exemplarily, the first transmitter 110 may be referred to as an active transmitter, and the second transmitter 120 may be referred to as a back scattering transmitter. That is, the embodiments of the present application propose a new form of terminal, i.e., the terminal has both the capability that the active transmitter actively transmits when information needs to be transmitted, and the capability that the back scattering transmitter transmits information by means of back scattering when power saving is needed, thereby achieving significant power saving effects.

It can be seen that this form of terminal that supports active transmission and back scattering has a dual-mode transmission capability, and thus has advantages, of the zero-power terminal and the traditional terminal, trigger transmission of information in a timely manner, and significant power saving of the terminal based on back scattering transmission. Exemplarily, the terminal device provided in the embodiments of the present application may be an advanced terminal having a normal signal transceiving capability as well as a back scattering capability, which may achieve power saving in specific situations.

Exemplarily, in the embodiments of the present application, the first transmitter 110 has the active transmission capability, which means that the first transmitter 110 can actively transmit. Specifically, the active transmission capability of the first transmitter 110 means that that the first transmitter 110 can autonomously generate signals (compared with the second transmitter 120, the signal generation of the first transmitter 110 does not have to depend on an external signal). Exemplarily, the first transmitter 100 is equipped with a complete radio frequency chain, including, for example, a crystal oscillator, an oscillator, a power amplifier (PA), a filter, and an antenna, so that the first transmitter 100 can autonomously generate signals. Optionally, in actual applications, the first transmitter 110 may determine whether to autonomously trigger signal transmission or to transmit a signal based on triggering or scheduling of a network according to different situations. That is, active transmission of the first transmitter 110 may also be achieved after receiving a scheduling signaling from the network.

It should be noted that the type of the first transmitter 110 is not limited in the present application. That is, in the embodiments of the present application, the first transmitter 110 may include any type of transmitter with an active transmission capability.

For example, the first transmitter 110 may include at least one of a narrow band Internet of Things (NB-IoT) transmitter, a machine type communication (MTC) transmitter, a Bluetooth transmitter, and a WiFi transmitter.

For another example, the first transmitter 100 may include a mobile communication transmitter. Optionally, the mobile communication transmitter may include at least one of a GSM transmitter, a CDMA transmitter, a WCDMA transmitter, an LTE transmitter and an NR transmitter. Alternatively, the mobile communication transmitter may include a new generation mobile communication transmitter, such as a 6th-generation (6G) transmitter.

Optionally, a transmission waveform of the first transmitter 110 may be a single-carrier signal, a multi-carrier signal, a code division multiple access signal, or an orthogonal frequency division multiplexing (OFDM) signal.

In the embodiments of the present application, the second transmitter 120 may implement signal transmission based on the back scattering technology in the aforementioned related art, that is, the second transmitter 120 implements signal transmission by modulating a received signal (e.g., a carrier signal). Optionally, the second transmitter 120 does not have the active transmission capability or cannot generate signals autonomously. For example, the second transmitter 120 has a relatively simple a radio frequency structure, so the second transmitter 120 implements signal transmission by modulating the received signal by only depending on the back scattering technology. Optionally, in actual applications, the second transmitter 120 may also perform signal transmission based on scheduling or controlling of the network.

Optionally, the second transmitter 120 may support at least one modulation method of ASK, FSK and PSK, which is not limited in the present application.

Optionally, the second transmitter 120 obtains power based on a signal received by the terminal device 100. That is, the second transmitter 120 may provide itself with power by means of power harvesting.

Optionally, the second transmitter 120 obtains power based on a power supply of the terminal device 100. That is, the second transmitter 120 may use the power supply of the terminal device 100 to drive itself to work, for example, to drive a logic circuit related to back scattering to work. Exemplarily, the power supply is used to drive the terminal device 100 to work normally, and also used to drive the first transmitter 110 of the terminal device 100 to work.

Further, the terminal device 100 may also have a receiver. Optionally, in addition to a conventional main receiver, the terminal device 100 may also have an additional low-power receiver. As shown in FIG. 8, the terminal device 100 further includes a first receiver 130 and a second receiver 140, and power consumption of the second receiver 140 is less than power consumption of the second receiver 130.

Exemplarily, the terminal device 100 may include a first transceiver and a second transceiver; the first transceiver includes the first transmitter 110 (an active transmitter) and the first receiver 130, and the second transceiver includes the second transmitter 120 (a back scattering transmitter) and the second receiver 140. The first transceiver has a stronger signal processing capability, and the second transceiver has a weaker signal processing capability but is more power saving, which uses back scattering technology during uplink transmission, and is in a low-power state during downlink reception.

It can be seen that the terminal device 100 can transmit signals based on the back scattering technology, so that the terminal device 100 has power saving effects in an uplink signal processing process. Furthermore, since the terminal device 100 not only has the back scattering transmitter but also has the second receiver with low power consumption, the power saving effects of the terminal device is further improved.

Optionally, a first capability of the first receiver 130 is higher than a first capability of the second receiver 140, and the first capability includes at least one of supported bandwidth, supported modulation order, supported transmission rate, supported transmission bit rate and supported quantities of transmission data streams.

Exemplarily, the first capability of the first receiver is higher than the first capability of the second receiver, including at least one of the following:
supported bandwidth of the first receiver being greater than supported bandwidth of the second receiver;
supported modulation order of the first receiver being higher than supported modulation order of the second receiver;
supported transmission rate of the first receiver being higher than supported transmission rate of the second receiver;
supported transmission bit rate of the first receiver being higher than supported transmission bit rate of the second receiver; and
supported quantities of transmission data streams of the first receiver being greater than supported quantities of transmission data streams of the second receiver.

That is to say, the first receiver 130 (which may serve as a main receiver) has a stronger signal receiving capability, such as supporting broadband data transmission, high-order modulation, high-speed transmission, high bit rate transmission, and multi-stream transmission; the second receiver 140 (a low-power receiver) supports a narrower receiving bandwidth, low-order simple modulation, low-speed transmission, low bit rate transmission, and single-stream transmission.

Optionally, the first receiver is used to receive information in a service scenario, and the second receiver is used to receive information in a non-service scenario. Exemplarily, when there is no service, the terminal device may use the second receiver to monitor network information (e.g., paging, system information, or a wake-up signal for waking up the first receiver), thereby being in a low-power reception mode. When there is a service to be transmitted, the terminal device may turn on the first receiver to achieve fast data transmission.

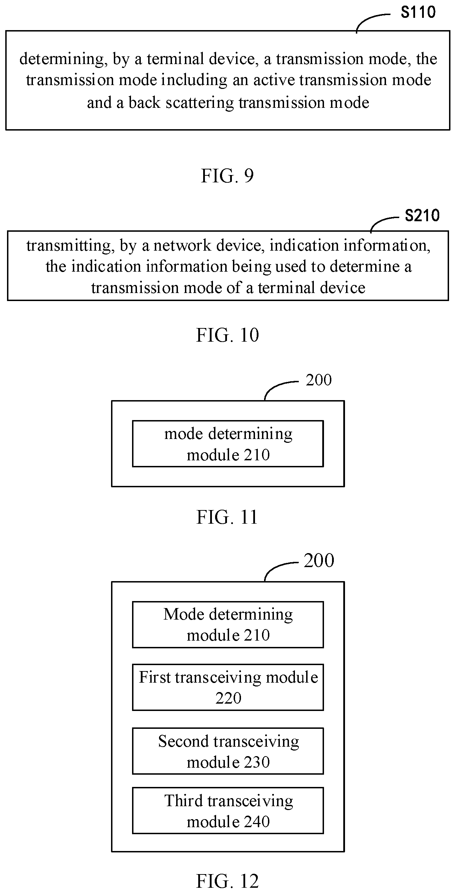

Correspondingly, the present application also provides a communication method, and the communication method is applied to a terminal device with a dual-mode transmission capability. FIG. 9 is a schematic flowchart of a communication method provided by an embodiment of the present application. The method includes:
S 110: determining, by a terminal device, a transmission mode, the transmission mode including an active transmission mode and a back scattering transmission mode.

According to the above method, the terminal device is capable of using two transmission modes, that is, the terminal device has the dual-mode transmission capability. In actual applications, the step S 110 may include a case that the terminal device determines the active transmission mode as the transmission mode(i.e., using the active transmission mode) in some situations, and determines the back scattering transmission mode as the transmission mode (i.e., using the back scattering transmission mode) in another situations.

Exemplarily, the terminal device in the communication method in the embodiments of the present application may be the terminal device including the first transmitter and the second transmitter in the aforementioned embodiments.

Optionally, in some embodiments of the present application, the communication method may include:
in response to that the transmission mode is the active transmission mode, transmitting, by the terminal device, information by using the first transmitter;
in response to that the transmission mode is the back scattering transmission mode, transmitting, by the terminal device, information by using the second transmitter.

That is, for the terminal device with the dual-mode transmission capability, different transmission modes correspond to different transmitters. For example, the active transmission mode corresponds to the first transmitter. Therefore, in the active transmission mode, the terminal device may actively trigger transmission of information based on the active transmission capability of the first transmitter. The back scattering mode corresponds to the second transmitter. Therefore, in the back scattering mode, the terminal device may implement, based on the second transmitter, signal transmission by modulating a received signal.

Optionally, the terminal device with dual-mode reflection capability may report the capability to a network, so that the network may select a suitable transmission mode according to actual data transmission requirements. Specifically, the communication method further includes:
transmitting, by the terminal device, capability information, the capability information being used to report that the terminal device supports the active transmission mode and the back scattering transmission mode.

Optionally, the capability information is carried by first information transmitted by the terminal device to a network device.

Optionally, the capability information may also be carried by a radio resource control (RRC) signaling transmitted by the terminal device to the network device.

Optionally, the communication method may include:
receiving, by the terminal device, a response message for the capability information, the response message being used to indicate that the terminal device uses the back scattering transmission mode.

For example, the terminal device may use the active transmission mode to transmit the first information to the network device, and the first information carries the capacity information to report the dual-mode transmission capability of the terminal device. The network device transmits response information to the terminal device. After receiving the response information, the terminal device may use the back scattering transmission mode.

Optionally, the terminal device may switch the transmission mode based on network indication, or may switch the transmission mode based on information such as an information transmission process or a channel condition. Several specific examples are provided below.

### Example 1: Switching based on the network indication

In this example, the network device may instruct the terminal device to use whether active transmission or back scattering as the transmission mode when data is transmitted. Specifically, the communication method includes:
receiving, by the terminal device, first indication information, the first indication information being used to indicate the transmission mode.

Correspondingly, in the step S110, the terminal device may determine the transmission mode according to the first indication information.

Exemplarily, the first indication information is determined by the network device based on at least one of a service scenario, power saving requirement information of the terminal device, and a channel condition of the terminal device.

As described above, the network device may select a suitable transmission mode according to actual data transmission requirements. In some optional implementations, the network may determine a data transmission mode actually used based on an actual service scenario or power saving requirements of the terminal. For example, for a terminal with a dual-mode transmission capability, when the network expects to transmit data quickly, the network may instruct the terminal to be in the active transmission mode; when being in a scenario that the amount of data is small and power saving of the terminal is important, the network may instruct the terminal to be in the back scattering transmission mode.

In some other optional implementations, the network may determine the data transmission mode actually used according to an actual channel condition of the terminal. Generally speaking, a terminal that is closer to a network device (e.g., a base station) receives a higher strength wireless signal transmitted by the network device. Stronger signal strength is conducive to back scattering implemented by the terminal, this is because after being back scattered by the terminal, the wireless signal needs to propagate from the terminal side to a network receiver, resulting in a great path loss. The wireless signal transmitted by the network received by a remote terminal is weak, so the wireless signal may not be successfully received by the network after back scattering. Therefore, the network device may determine which terminals can use the back scattering transmission mode according to the channel conditions of the terminals. For example, the network device receives feedback of a channel measurement result from the terminal and determines the transmission mode according to the measurement result. For terminals with good channel conditions (for example, reference signal received power (RSRP) is high, which means the terminal is close to the base station), the network may instruct the terminal to use the back scattering mode. On the contrary, for terminals with poor channel conditions, the active transmission may be used.

Optionally, the network device may configure or change the transmission mode by using a RRC signaling, a media access control control element (MAC Control Element, MAC CE), or the like. Alternatively, the network device may configure or change the transmission mode by using a dynamic signaling such as DCI. That is, the first indication information includes a first RRC signaling, a first MAC CE or downlink control information (DCI).

For example, a bit field may be set in scheduling DCI to indicate that which transmission mode the terminal uses when transmitting an uplink (UL) signal based on a value of the bit field; for example, the bit field is 1 bit, if the value of the bit field is "1 ", it means that the active transmission mode is used; if the value of the bit field is "0", it means that the back scattering transmission mode is used; and vice versa.

### Example 2: Switching based on an information transmission process

In this example, determining, by the terminal device, the transmission mode includes:
determining, by the terminal device, the transmission mode based on an information transmission process.

For example, in order to enable the terminal to actively initiate a data transmission process and maximize terminal power saving, when there is a need to transmit data, the terminal may use the active transmission mode to perform system access firstly, and when a response from a network is received, the terminal uses the back scattering mode to transmit subsequent signals. That is, determining, by the terminal device, the transmission mode based on the information transmission process may include:
using, by the terminal device, the active transmission mode when performing system access;
   and/or
using, by the terminal device, the back scattering transmission mode after receiving a response message for the system access.

Correspondingly, when the terminal device perform system access, the terminal device uses the first transmitter to transmit information; after the terminal device receives the response message for the system access, the terminal device uses the second transmitter to transmit information.

Optionally, using, by the terminal device, the active transmission mode when performing the system access includes:
using, by the terminal device, the active transmission mode before an RRC connection is established;
   or
using, by the terminal device, the active transmission mode when transmitting first information to a network device.

That is, the terminal device may use the active transmission mode throughout an entire process of system access. For example, the terminal device may use the active transmission mode before the RRC connection is established, and use the back scattering transmission mode after the RRC connection is established. Alternatively, the terminal device may initiate system access by transmitting the first information to the network device, and use the active transmission mode when transmitting the first information. For example, the terminal device may use the active transmission mode when transmitting a random access signal (or service request information), and once receiving a response from the network, the terminal may switch back to the back scattering transmission mode.

Exemplarily, after receiving the response message for the system access, the terminal device may actively use the back scattering transmission mode, or use the back scattering transmission mode based on indication information carried by the response message from the network device. For example, when performing system access, the terminal device reports the capability information (for example, the capability information being carried when the first information is transmitted), and the network device transmits a response message for the system access or a response message for the capability information to the terminal device. The response message is used to indicate that the terminal device uses the back scattering transmission mode.

### Example 3: Switching based on a channel condition

In this example, determining, by the terminal device, the transmission mode includes:
determining, by the terminal device, the transmission mode based on a channel condition.

As described above, the channel condition of the terminal device, such as distance from a network, will affect reception of a back scattered signal. Therefore, the terminal device may determine the transmission mode based on the channel condition. Specifically, the terminal device may sense the channel condition based on channel measurement information (i.e., a channel measurement result), and then determine the transmission mode based on the channel measurement information.

Optionally, determining, by the terminal device, the transmission mode based on the channel condition includes:
determining, by the terminal device, the transmission mode based on a magnitude relationship between channel measurement information and a first threshold value.

For example, if the channel measurement information is greater than the first threshold value, the terminal device uses the back scattering transmission mode, otherwise the terminal device uses the active transmission mode.

Optionally, in the embodiments of the present application, the channel measurement information includes at least one of: RSRP, a received signal strength indicator (RSSI), reference signal received quality (RSRQ), and signal to interference plus noise ratio (SINR).

Optionally, the first threshold value includes one measurement result threshold or a group of measurement result thresholds. For example, the first threshold value may include an RSRP threshold or an RSSI threshold. When RSRP actually measured is greater than the RSRP threshold or when RSSI actually measured is greater than the RSSI threshold, the terminal device uses the back scattering transmission mode, otherwise the terminal device uses the active transmission mode. For another example, the first threshold value may include an RSRP threshold value and an SINR threshold value. When RSRP and SINR actually measured are both greater than the respective threshold values, the terminal device uses the back scattering transmission mode, otherwise the terminal device uses the active transmission mode.

Optionally, the first threshold value may be configured by a network device. That is, the communication method further includes:
receiving, by the terminal device, second indication information, the second indication information being used to indicate the first threshold value.

Optionally, the network device may configure the terminal with the first threshold value by using a broadcast signaling, RRC signaling, or MAC CE signaling. That is, the second indication information includes the broadcast signaling, the second RRC signaling or the second MAC CE.

It can be seen that, in the embodiments of the present application, the network device may cause the terminal device to reasonably determine the transmission mode by the way of directly indicating or indicating a threshold value. Accordingly, FIG. 10 shows a communication method provided in another embodiment of the present application, the method includes:
S210: transmitting, by a network device, indication information, the indication information being used to determine a transmission mode of a terminal device.

In some exemplary embodiments, for the indication information, reference may be made to the first indication information in the aforementioned Example 1, that is, the indication information may be used to indicate the transmission mode, i.e., directly indicating that the terminal device uses the active transmission mode or the back scattering transmission mode.

Optionally, the indication information includes a first RRC signaling, a first MAC CE or DCI.

Optionally, before transmitting, by the network device, the indication information, the method further includes:
determining, by the network device, the indication information based on at least one of a service scenario, power saving requirement information of the terminal device, and a channel condition of the terminal device.

In some other exemplary embodiments, for the indication information, reference may be made to the second indication information in the aforementioned Example 3, that is, the indication information may be used to indicate a first threshold value, and the first threshold value is used for the terminal device to determine the transmission mode based on the channel measurement information.

Optionally, the channel measurement information includes at least one of: RSRP, RSSI, RSRQ, and SINR.

Optionally, the indication information includes a broadcast signaling, a second RRC signaling or a second MAC CE.

Optionally, before transmitting, by the network device, the indication information, the communication method further includes:
receiving, by the network device, capability information, the capability information being used to report that the terminal device supports an active transmission mode and a back scattering transmission mode.

Optionally, the capability information is carried by first information transmitted by the terminal device to the network device.

Optionally, after receiving, by the network device, capability information, the communication method further includes:
transmitting, by the network device, a response message for the capability information, the response message being used to indicate that the terminal device uses the back scattering transmission mode.

Optionally, in each of the methods in above examples, the method may further includes:
receiving, by the network device, information by using a reception mode corresponding to a transmission mode of the terminal device for transmitting the information.

The specific configurations and implementations of the embodiments of the present application are described above from different perspectives through multiple embodiments. By using at least one of the above embodiments, the terminal device may timely trigger transmission of information based on the active transmission, or may perform transmission of information based on the back scattering technology, thereby achieving extremely low-power transmission as much as possible while the transmission performance is ensured.

Correspondingly to the processing method in at least one of the above embodiments, the embodiments of the present application further provide a terminal device 200, referring to FIG. 11, the terminal device 200 includes:
a mode determining module 210 configured to determine the transmission mode, the transmission mode including the active transmission mode and the back scattering transmission mode.

Optionally, as shown in FIG. 12, in the embodiments of the present application, the terminal device 200 further includes:
a first transceiving module 220 configured to transmit information by using the first transmitter in response to that the transmission mode is the active transmission mode, and transmit information by using the second transmitter in response to that the transmission mode is the back scattering transmission mode.

Optionally, the terminal device 200 may be the terminal device including the first transmitter and the second transmitter in the aforementioned embodiments.

Optionally, the terminal device 200 further includes:
a second transceiving module 230 configured to transmit capability information, the capability information being used to report that the terminal device 200 supports the active transmission mode and the back scattering transmission mode.

Optionally, the capability information is carried by the first information transmitted by the terminal device 200 to the network device.

Optionally, the second transceiving module 230 is further configured to:
receive the response message for the capability information, the response message being used to indicate that the terminal device 200 uses the back scattering transmission mode.

Optionally, in some embodiments of the present application, as shown in FIG. 12, the terminal device 200 further includes:
a third transceiving module 240 configured to receive first indication information, the first indication information being used to indicate the transmission mode.

Optionally, the first indication information includes the first radio resource control (RRC) signaling, the first media access control control element (MAC CE) or the downlink control information (DCI).

Optionally, the first indication information is determined by the network device based on at least one of the service scenario, the power saving requirement information of the terminal device 200, and the channel condition of the terminal device 200.

Optionally, in some other embodiments of the present application, the mode determining module 210 is specifically configured to:
determine the transmission mode based on the information transmission process.

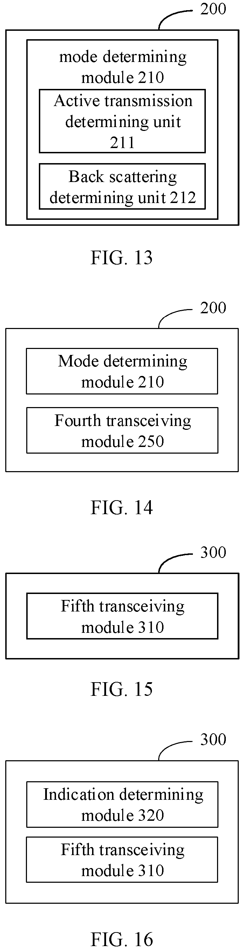

Optionally, as shown in FIG. 13, the mode determining module 210 includes:
an active transmission determining unit 211 configured to use the active transmission mode when performing system access.

Optionally, the active transmission determining unit 211 is further configured to:
use the active transmission mode before the RRC connection is established.

Optionally, the active transmission determining unit 211 is further configured to:
use the active transmission mode when transmitting the first information to the network device.

Optionally, as shown in FIG. 13, the mode determining module 210 includes:
a back scattering determining unit 212, configured to use the back scattering transmission mode after receiving the response message for the system access.

Optionally, in some other embodiments of the present application, the mode determining module 210 is further configured to:
determine the transmission mode based on the channel condition.

Optionally, the mode determining module 210 is further configured to:
determine the transmission mode based on the magnitude relationship between the channel measurement information and the first threshold value.

Optionally, in the embodiments of the present application, the channel measurement information includes at least one of: reference signal received power (RSRP), a received signal strength indicator (RSSI), reference signal received quality (RSRQ), and a signal to interference plus noise ratio (SINR).

Optionally, as shown in FIG. 14, the terminal device 200 further includes:
a fourth transceiving module 250 configured to receive the second indication information, the second indication information being used to indicate the first threshold value.

Optionally, in the embodiments of the present application, the second indication information includes the broadcast signaling, the second RRC signaling or the second MAC CE.

The terminal device 200 in the embodiments of the present application can achieve corresponding functions of the terminal device in the aforementioned method embodiments. For the processes, functions, implementations and effects corresponding to each module (sub-module, unit or component) in the terminal device 200, reference may be made to the corresponding description in the above method embodiments, which will not be repeated here. It will be noted that the functions described in the various modules (sub-modules, units or components) in the terminal device 200 in the embodiments of the present application may be implemented by different modules (sub-modules, units or components, etc.) or by the same module (sub-module, unit or component). For example, the first transceiving module and the second transceiving module may be different modules or the same module, and may both achieve corresponding functions in the embodiments of the present application. In addition, a transceiving module in the embodiments of the present application may be implemented by a transceiver of a device, and part or all of remaining modules may be implemented by a processor of the device.

FIG. 15 is a schematic block diagram of a network device 300, in accordance with an embodiment of the present application. The network device 300 may include:
a fifth transceiving module 310 configured to transmit indication information, the indication information being used to determine the transmission mode of the terminal device.

Optionally, in some embodiments of the present application, the indication information is used to indicate the transmission mode.

Optionally, the indication information includes the first radio resource control (RRC) signaling, the first media access control control element (MAC CE) or the downlink control information (DCI).

Optionally, as shown in FIG. 16, in some embodiments, the network device 300 further includes:
an indication determining module 320 configured for the network device to determine the indication information based on at least one of the service scenario, the power saving requirement information of the terminal device, and the channel condition of the terminal device.

Optionally, the indication information is used to indicate the first threshold value, and the first threshold value is used for the terminal device to determine the transmission mode based on the channel measurement information.

Optionally, in the embodiments of the present application, the channel measurement information includes at least one of: the reference signal received power (RSRP), the received signal strength indicator (RSSI), the reference signal received quality (RSRQ), and the signal to interference plus noise ratio (SINR).

Optionally, the indication information includes the broadcast signaling, the second RRC signaling or the second MAC CE.

Optionally, in the embodiments of the present application, the fifth transceiving module 310 is further configured to:
receive the capability information, the capability information being used to report that the terminal device supports the active transmission mode and the back scattering transmission mode.

Optionally, the capability information is carried by the first information transmitted by the terminal device to the network device.

Optionally, the fifth transceiving module 310 is further configured to:
transmit the response message for the capability information, the response message being used to indicate that the terminal device uses the back scattering transmission mode.

Optionally, the fifth transceiving module 310 is further configured to:
receive the information by using the reception mode corresponding to the transmission mode of the terminal device for transmitting the information.

The network device 300 of the embodiments of the present application can achieve corresponding functions of the network device in the aforementioned method embodiments. For the processes, functions, implementations and effects corresponding to each module (sub-module, unit or component) in the network device 300, reference may be made to the corresponding description in the above method embodiments, which will not be repeated here. It will be noted that the functions described in the various modules (sub-modules, units or components) in the network device 300 in the embodiments of the present application may be implemented by different modules (sub-modules, units or components) or by the same module (sub-module, unit or component). For example, the first transceiving module and the second transceiving module may be different modules or the same module, and may both achieve corresponding functions in the embodiments of the present application. In addition, a transceiving module in the embodiments of the present application may be implemented by a transceiver of a device, and part or all of remaining modules may be implemented by a processor of the device.

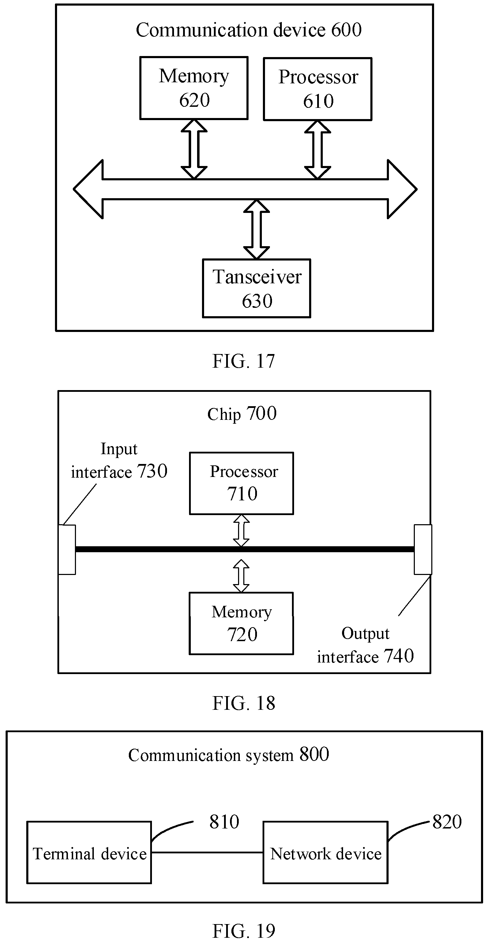

FIG. 17 is a schematic structural diagram of a communication device 600, in accordance with the embodiments of the present application. The communication device 600 includes a processor 610, and the processor 610 may call and run a computer program from a memory to implement the methods in the embodiments of the present application.

Optionally, the communication device 600 may further include a memory 620. The processor 610 may call and run the computer program from the memory 620 to implement the methods in the embodiments of the present application.

The memory 620 may be a separate device independent of the processor 610, or may be integrated into the processor 610.

Optionally, the communication device 600 may further include a transceiver 630, and the processor 610 may control the transceiver 630 to communicate with other devices, specifically, to transmit information or data to other devices, or to receive information or data transmitted by other devices.

The transceiver 630 may include a transmitter and a receiver. The transceiver 630 may further include antenna(s). There may be one or more antennas.

Optionally, the communication device 600 may be the network device in the embodiments of the present application, and the communication device 600 may implement the corresponding processes implemented by the network device in each method in the embodiments of the present application, which will not be repeated here for the sake of brevity.

Optionally, the communication device 600 may be the terminal device in the embodiments of the present application, and the communication device 600 may implement the corresponding processes implemented by the terminal device in each method in the embodiments of the present application, which will not be repeated here for the sake of brevity.

FIG. 18 is a schematic structural diagram of a chip 700, in accordance with embodiments of the present application. The chip 700 includes a processor 710, and the processor 710 may call and run a computer program from a memory to implement the methods in the embodiments of the present application.

Optionally, the chip further includes a memory 720. The processor 710 may call and run the computer program from the memory 720 to implement the methods in the embodiments of the present application.

The memory 720 may be a separate device independent of the processor 710, or may be integrated into the processor 710.

Optionally, the chip 700 may further include an input interface 730. The processor 710 may control the input interface 730 to communicate with other devices or chips, specifically, may control the input interface 730 to obtain information or data sent by other devices or chips.

Optionally, the chip 700 may further include an output interface 740. The processor 710 may control the output interface 740 to communicate with other devices or chips, specifically, may control the output interface 740 to output information or data to other devices or chips.

Optionally, the chip may be applied to the network device in the embodiments of the present application, and the chip may implement the corresponding processes implemented by the network device in each method in the embodiments of the present application, which will not be repeated here for the sake of brevity.

Optionally, the chip may be applied to the terminal device in the embodiments of the present application, and the chip may implement the corresponding processes implemented by the terminal device in each method in the embodiments of the present application, which will not be repeated here for the sake of brevity.

It should be understood that the chip mentioned in the embodiments of the present application may be referred to as a system-level chip, a system chip, a chip system, a system-on-chip, or the like.

The processor mentioned above may be a general-purpose processor, a digital signal processor (DSP), a field programmable gate array (FPGA), an application specific integrated circuit (ASIC), other programmable logic devices, a transistor logic device, a discrete hardware component, or the like. The general purpose processor mentioned above may be a microprocessor or any conventional processor, or the like.

The memory mentioned above may be a volatile memory or a non-volatile memory, or may include both volatile and non-volatile memories. Here, the non-volatile memory may be a read-only memory (ROM), a programmable ROM (PROM), an erasable programmable read-only memory (erasable PROM, EPROM), an electrically erasable programmable read-only memory (electrically EPROM, EEPROM), or a flash memory. The volatile memory may be a random access memory (RAM).

It should be understood that the above-mentioned memory is exemplary but not restrictive. For example, the memory in the embodiments of the present application may also be static random access memory (static RAM, SRAM), dynamic random access memory (dynamic RAM, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synchronous link dynamic random access memory (synch link DRAM, SLDRAM), direct memory bus random access memory (Direct Rambus RAM, DR RAM), or the like. That is, the memory in the embodiments of the present application is intended to include but is not limited to these and any other suitable types of memory.

FIG. 19 is a schematic block diagram of a communication system 800, in accordance with the embodiments of the present application. The communication system 800 includes a terminal device 810 and a network device 820.

The terminal device 810 may be used to implement the corresponding functions implemented by the terminal device in the method in various embodiments of the present application, and the network device 820 may be used to implement the corresponding functions implemented by the network device in the method in various embodiments of the present application, which will not be repeated here for the sake of brevity.

The above embodiments may be implemented in whole or in part through software, hardware, firmware, or any combination thereof. When the embodiments are implemented by using a software program, the software program may be implemented in a form of a computer program product in whole or in part. The computer program product includes one or more computer instructions. When computer program instructions are loaded on and executed by a computer, processes or functions according to the embodiments of the present application are generated in whole or in part. The computer may be a general-purpose computer, a dedicated computer, a computer network, or any other programmable device. The computer instructions may be stored in a computer-readable storage medium or transmitted from a computer-readable storage medium to another computer-readable storage medium. For example, the computer instructions may be transmitted from a website, computer, server or data center to another website, computer, server or data center via a wired manner (e.g., coaxial cable, optical fiber, or digital subscriber line (DSL)) or a wireless manner (e.g., infrared, wireless or microwave). The computer-readable storage medium may be any available medium able to be accessed by the computer, or may be a data storage device, such as a server or a data center, integrated by one or more available media. The available medium may be a magnetic medium (e.g., a floppy disk, a hard disk or a magnetic tape), an optical medium (e.g., a DVD), a semiconductor medium (e.g., a solid state drive (SSD)), or the like.

It should be understood that in the various embodiments of the present application, the magnitude of the serial number of each of the above-mentioned processes does not mean the order of execution. The order of execution of each process shall be determined by its function and internal logic, and shall not constitute any limitation on the implementation process of the embodiments of the present application.

Those skilled in the art can clearly understand that for the convenience and simplicity of description, the working processes of the systems, devices and units described above may refer to the corresponding processes in the above method embodiments, and details will not be repeated here.

In the description of the specification, the term such as "an embodiment", "some embodiments", "example", "specific example" or "some examples" is intended to indicate that specific features, structures, materials or characteristics related to the embodiment(s) or example(s) are included in at least one embodiment or example of the present invention. Moreover, the specific features, structures, materials or characteristics can be combined in any one or more embodiments or examples in any suitable way. In addition, those skilled in the art can combine and associate different embodiments or examples and features of different embodiments or examples described in this specification without mutual contradiction.

Furthermore, terms such as "first" and "second" are only used for descriptive purposes, and are not to be understood as indicating or implying the relative importance or implicitly indicating the number of indicated technical features. Thus, features defined by "first" or "second" may explicitly or implicitly include one or more of the features. In the description of the embodiments of the present invention, term "a plurality of" or "multiple" means two or more unless otherwise specified.

The foregoing descriptions are merely specific implementations of the present application, but the protection scope of the present application is not limited thereto. Any skilled person in the art could readily conceive of changes or replacements within the technical scope of the present application, which shall all be included in the protection scope of the present application. Therefore, the protection scope of the present application shall be subject to the protection scope of the claims.

## Claims

1. A terminal device, comprising a first transmitter with an active transmission capability and a second transmitter based on a back scattering technology.

2. The terminal device of claim 1, wherein the first transmitter comprises at least one of a narrow band Internet of Things (NB-IoT) transmitter, a machine type communication (MTC) transmitter, a Bluetooth transmitter, and a wireless fidelity (WiFi) transmitter.

3. The terminal device of claim 1, wherein the first transmitter comprises a mobile communication transmitter.

4. The terminal device of claim 3, wherein the mobile communication transmitter comprises at least one of a global system of mobile communication (GSM) transmitter, a code division multiple access (CDMA) transmitter, a wideband code division multiple access (WCDMA) transmitter, a long term evolution (LTE) transmitter, and a new radio (NR) transmitter.

5. The terminal device of any one of claims 1 to 4, wherein the second transmitter implements signal transmission by modulating a received signal.

6. The terminal device of any one of claims 1 to 5, wherein the second transmitter obtains power based on a signal received by the terminal device.

7. The terminal device of any one of claims 1 to 5, wherein the second transmitter obtains power based on a power supply of the terminal device.

8. The terminal device of any one of claims 1 to 7, wherein the terminal device further comprises a first receiver and a second receiver; wherein power consumption of the second receiver is less than power consumption of the second receiver.

9. The terminal device of claim 8, wherein a first capability of the first receiver is higher than a first capability of the second receiver, and the first capability comprises at least one of supported bandwidth, supported modulation order, supported transmission rate, supported transmission bit rate and supported quantities of transmission data streams.

10. The terminal device of claim 9, wherein the first capability of the first receiver is higher than the first capability of the second receiver, comprising at least one of:
supported bandwidth of the first receiver being greater than supported bandwidth of the second receiver;
supported modulation order of the first receiver being higher than supported modulation order of the second receiver;
supported transmission rate of the first receiver being higher than supported transmission rate of the second receiver;
supported transmission bit rate of the first receiver being higher than supported transmission bit rate of the second receiver; and
supported quantities of transmission data streams of the first receiver being greater than supported quantities of transmission data streams of the second receiver.

11. The terminal device of any one of claims 8 to 10, wherein the first receiver is used to receive information in a service scenario, and the second receiver is used to receive information in a non-service scenario.

12. A communication method, comprising:
determining, by a terminal device, a transmission mode; wherein the transmission mode comprises an active transmission mode and a back scattering transmission mode.

13. The method of claim 12, wherein the method further comprises:
in response to that the transmission mode is the active transmission mode, transmitting, by the terminal device, information by using a first transmitter; or
in response to that the transmission mode is the back scattering transmission mode, transmitting, by the terminal device, information by using a second transmitter.

14. The method of claim 13, wherein the terminal device is the terminal device of any one of claims 1 to 9.

15. The method of any one of claims 12 to 14, wherein the method further comprises:
transmitting, by the terminal device, capability information; wherein the capability information is used to report that the terminal device supports the active transmission mode and the back scattering transmission mode.

16. The method of claim 15, wherein the capability information is carried by first information transmitted by the terminal device to a network device.

17. The method of claim 15 or 16, wherein the method further comprises:
receiving, by the terminal device, a response message for the capability information; wherein the response message is used to indicate that the terminal device uses the back scattering transmission mode.

18. The method of any one of claims 12 to 17, wherein the method further comprises:
receiving, by the terminal device, first indication information; wherein the first indication information is used to indicate the transmission mode.

19. The method of claim 18, wherein the first indication information comprises a first radio resource control (RRC) signaling, a first medium access control control element (MAC CE) or downlink control information (DCI).

20. The method of claim 18 or 19, wherein the first indication information is determined by a network device based on at least one of a service scenario, power saving requirement information of the terminal device, and a channel condition of the terminal device.

21. The method of any one of claims 12 to 17, wherein determining, by the terminal device, the transmission mode comprises:
determining, by the terminal device, the transmission mode based on an information transmission process.

22. The method of claim 21, wherein determining, by the terminal device, the transmission mode based on the information transmission process comprises:
using, by the terminal device, the active transmission mode when performing system access.

23. The method of claim 22, wherein using, by the terminal device, the active transmission mode when performing the system access comprises:
using, by the terminal device, the active transmission mode before an RRC connection is established.

24. The method of claim 22 or 23, wherein using, by the terminal device, the active transmission mode when performing the system accessing comprises:
using, by the terminal device, the active transmission mode when the terminal device transmits first information to a network device.

25. The method of any one of claims 21 to 24, wherein determining, by the terminal device, the transmission mode based on the information transmission process comprises:
using, by the terminal device, the back scattering transmission mode after receiving a response message for system access.

26. The method of any one of claims 12 to 17, wherein determining, by the terminal device, the transmission mode comprises:
determining, by the terminal device, the transmission mode based on a channel condition.

27. The method of claim 26, wherein determining, by the terminal device, the transmission mode based on a channel condition comprises:
determining, by the terminal device, the transmission mode based on a magnitude relationship between channel measurement information and a first threshold value.

28. The method of claim 27, wherein the channel measurement information comprises at least one of: reference signal received power (RSRP), a received signal strength indicator (RSSI), reference signal received quality (RSRQ), and a signal to interference plus noise ratio (SINR).

29. The method of claim 27 or 28, wherein the method further comprises:
receiving, by the terminal device, second indication information; wherein the second indication information is used to indicate the first threshold value.

30. The method of claim 29, wherein the second indication information comprises a broadcast signaling, a second RRC signaling or a second MAC CE.

31. A communication method, comprising:
transmitting, by a network device, indication information, wherein the indication information is used to determine a transmission mode of a terminal device.

32. The method of claim 31, wherein the indication information is used to indicate the transmission mode.

33. The method of claim 32, wherein the indication information comprises a first radio resource control (RRC) signaling, a first medium access control control element (MAC CE) or downlink control information (DCI).

34. The method of claim 32 or 33, wherein before transmitting, by the network device, the indication information, the method further comprises:
determining, by the network device, the indication information based on at least one of a service scenario, power saving requirement information of the terminal device, and a channel condition of the terminal device.

35. The method of claim 31, wherein the indication information is used to indicate a first threshold value, and the first threshold value is used for the terminal device to determine the transmission mode based on channel measurement information.

36. The method of claim 35, wherein the channel measurement information comprises at least one of: reference signal received power (RSRP), a received signal strength indicator (RSSI), reference signal received quality (RSRQ), and a signal to interference plus noise ratio (SINR).

37. The method of claim 35 or 36, wherein the indication information comprises a broadcast signaling, a second RRC signaling or a second MAC CE.

38. The method of any one of claims 31 to 37, wherein before transmitting, by the network device, the indication information, the method further comprises:
receiving, by the network device, capability information; wherein the capability information is used to report that the terminal device supports an active transmission mode and a back scattering transmission mode.

39. The method of claim 38, wherein the capability information is carried by first information transmitted by the terminal device to the network device.

40. The method of claim 38 or 39, wherein the method further comprises:
transmitting, by the network device, a response message for the capability information; wherein the response message is used to indicate that the terminal device uses the back scattering transmission mode.

41. The method of any one of claims 31 to 40, wherein the method further comprises:
receiving, by the network device, information by using a reception mode corresponding to a transmission mode of the terminal device for transmitting the information.

42. A terminal device, comprising:
a mode determining module, configured to determine a transmission mode; wherein the transmission mode comprises an active transmission mode and a back scattering transmission mode.

43. The terminal device of claim 42, wherein the terminal device further comprises:
a first transceiving module configured to: transmit information by using a first transmitter in response to that the transmission mode is the active transmission mode, and transmit information by using a second transmitter in response to that the transmission mode is the back scattering transmission mode.

44. The terminal device of claim 43, wherein the terminal device is the terminal device of any one of claims 1 to 9.

45. The terminal device of any one of claims 42 to 44, wherein the terminal device further comprises:
a second transceiving module, configured to transmit capability information; wherein the capability information is used to report that the terminal device supports the active transmission mode and the back scattering transmission mode.

46. The terminal device of claim 45, wherein the capability information is carried by first information transmitted by the terminal device to a network device.

47. The terminal device of claim 45 or 46, wherein the second transceiving module is further configured to:
receive a response message for the capability information; wherein the response message is used to indicate that the terminal device uses the back scattering transmission mode.

48. The terminal device of any one of claims 42 to 47, wherein the terminal device further comprises:
a third transceiving module, configured to receive first indication information; wherein the first indication information is used to indicate the transmission mode.

49. The terminal device of claim 48, wherein the first indication information comprises a first radio resource control (RRC) signaling, a first medium access control control element (MAC CE) or downlink control information (DCI).

50. The terminal device of claim 48 or 49, wherein the first indication information is determined by a network device based on at least one of a service scenario, power saving requirement information of the terminal device, and a channel condition of the terminal device.

51. The terminal device of any one of claims 42 to 47, wherein the mode determining module is further configured to:
determine the transmission mode based on an information transmission process.

52. The terminal device of claim 51, wherein the mode determining module comprises:
an active transmission determining unit, configured to use the active transmission mode when performing system access.

53. The terminal device of claim 52, wherein the active transmission determining unit is further configured to:
use the active transmission mode before an RRC connection is established.

54. The terminal device of claim 52 or 53, wherein the active transmission determining unit is further configured to:
use the active transmission mode when the terminal device transmits first information to a network device.

55. The terminal device of any one of claims 51 to 54, wherein the mode determining module comprises:
a back scattering determining unit, configured to use the back scattering transmission mode after receiving a response message for system access.

56. The terminal device of any one of claims 42 to 47, wherein the mode determining module is further configured to:
determine the transmission mode based on a channel condition,

57. The terminal device of claim 56, wherein the model determining module is further configured to:
determine the transmission mode based on a magnitude relationship between channel measurement information and a first threshold value.

58. The terminal device of claim 57, wherein the channel measurement information comprises at least one of: reference signal received power (RSRP), a received signal strength indicator (RSSI), reference signal received quality (RSRQ), and a signal to interference plus noise ratio (SINR).

59. The terminal device of claim 57 or 58, wherein the terminal device further comprises:
a fourth transceiving module, configured to receive second indication information; wherein the second indication information is used to indicate the first threshold value.

60. The terminal device of claim 59, wherein the second indication information comprises a broadcast signaling, a second RRC signaling or a second MAC CE.

61. A network device, comprising:
a fifth transceiving module, configured to transmit indication information; wherein the indication information is used to determine a transmission mode of a terminal device.

62. The network device of claim 61, wherein the indication information is used to indicate the transmission mode.

63. The network device of claim 62, wherein the indication information comprises a first radio resource control (RRC) signaling, a first medium access control control element (MAC CE) or downlink control information (DCI).

64. The network device of claim62 or 63, wherein the network device further comprises:
an indication determining module, configured for the network device to determine the indication information based on at least one of a service scenario, power saving requirement information of the terminal device, and a channel condition of the terminal device.

65. The network device of claim 61, wherein the indication information is used to indicate a first threshold value, and the first threshold value is used for the terminal device to determine the transmission mode based on channel measurement information.

66. The network device of claim 65, wherein the channel measurement information comprises at least one of: reference signal received power (RSRP), a received signal strength indicator (RSSI), reference signal received quality (RSRQ), and a signal to interference plus noise ratio (SINR).

67. The network device of claim 65 or 66, wherein the indication information comprises a broadcast signaling, a second RRC signaling or a second MAC CE.

68. The network device of any one of claims 61 to 67, wherein the fifth transceiving module is further configured to:
receive capability information; wherein the capability information is used to report that the terminal device supports an active transmission mode and a back scattering transmission mode.

69. The network device of claim 68, wherein the capability information is carried by first information transmitted by the terminal device to the network device.

70. The network device of claim 68 or 69, wherein the fifth transceiving module is further configured to:
transmit a response message for the capability information; wherein the response message is used to indicate that the terminal device uses the back scattering transmission mode.

71. The network device of any one of claims 61 to 70, wherein the fifth transceiving module is further configured to:
receive information by using a reception mode corresponding to a transmission mode of the terminal device for transmitting the information.

72. A terminal device, comprising: a processor and a memory, wherein the memory is configured to store a computer program, and the processor is configured to call and run the computer program stored in the memory to perform steps of the method of any one of claims 12 to 30.

73. A network device, comprising: a processor and a memory, wherein the memory is configured to store a computer program, and the processor is configured to call and run the computer program stored in the memory to perform steps of the method of any one of claims 31 to 41.

74. A chip, comprising:
a processor, configured to call and run a computer program from a memory to cause a device equipped with the chip to perform steps of the method of any one of claims 12 to 41.

75. A computer-readable storage medium, configured to store a computer program, wherein the computer program causes a computer to perform steps of the method of any one of claims 12 to 41.

76. A computer program product, comprising computer program instructions, wherein the computer program instructions cause a computer to perform steps of the method of any one of claims 12 to 41.

77. A computer program, causing a computer to perform steps of the method of any one of claims 12 to 41.

78. A communication system, comprising:
a terminal device, configured to perform the method of any one of claims 12 to 30; and
a network device, configured to perform the method of any one of claims 31 to 41.
